# EUROPÄISCHE PATENTSCHRIFT

(11) **EP 0 401 682 B1**
(45) Veröffentlichungstag und Bekanntmachung des Hinweises auf die Patenterteilung: **07.04.1993**
(21) Anmeldenummer: 90110349.9
(22) Anmeldetag: 31.05.1990
(51) Int. Cl.: F28F 25/08, B01J 19/32

(54) **Füllkörper**
Packing element
Elément de remplissage

(30) Priorität: 06.06.1989 DE 3918483
(43) Veröffentlichungstag der Anmeldung: 12.12.1990
(73) Patentinhaber: Munters Euroform GmbH, D-52072 Aachen (DE)
(72) Erfinder: Schultz, Martin, B-4729 Hauset (BE)
(74) Vertreter: Döring, Wolfgang, Dr.-Ing. Patentanwälte Hauck, Graalfs, Wehnert, Döring, Siemons

(56) Entgegenhaltungen:
- EP-A- 0 036 944
- EP-A- 0 177 474
- DE-A- 2 921 270
- DE-B- 1 281 457
- DE-U- 8 904 345
- FR-A- 1 428 875
- FR-E- 85 386

## Beschreibung

Die vorliegende Erfindung betrifft einen Füllkörper für den Wärme- und Stoffaustausch im Gegenstrom, insbesondere für die Wasserkühlung durch Luft in Kühltürmen.

Ein solcher Füllkörper bzw. Kontaktkörper ist aus der DE-A- 21 13 614 bekannt. Bei dem bekannten Füllkörper kreuzen die Wellungen oder Faltungen einander in benachbarten Schichten unter einem Winkel von 45° oder weniger, vorzugsweise 25 bis 40°. Die Schichten stützen sich gegeneinander ab und sind an den Kontaktpunkten mittels eines geeigneten Bindemittels miteinander verleimt. Wasser und Luft strömen im Gegenstrom durch den Füllkörper hindurch. Zwischen den Schichten im Füllkörper werden durchgehende Kanäle mit sowohl waagerechtem als auch lotrechtem Verlauf und stets wechselnder Weite von Null an den Kontaktstellen zwischen den Schichten bis zur doppelten Höhe der Wellungen oder Faltungen erhalten. Die Höhe der Wellungen oder Faltungen kann sich auf 5 bis 25 mm belaufen und liegt vorzugsweise zwischen 10 bis 15 bis 20 mm, und die Kanalweite wechselt über die ganze Oberfläche der Schichten zwischen Null und der doppelten Höhe der Wellungen oder Faltungen.

Aus der DE-A-29 21 270 ist eine Packung für Stoffaustauschkolonnen bekannt, die mehrere Bänder mit Rippen aufweist, wobei die Bänder so angeordnet sind, daß die Rippen einander berührender Bänder einander kreuzen. Dabei verlaufen die Rippen in Bögen.

Aus der FR-A-85 386 ist ein Füllkörper bekannt, der Elemente mit bogenförmig verlaufenden Rippen aufweist. Hierbei können sich die Rippen von benachbarten Elementen kreuzen. Sie können auch parallel zueinander verlaufen.

Mit einer derartigen kreuzweisen Anordnung der Wellungen oder Faltungen benachbarter Folien oder Platten bzw. Schichten wird eine turbulente Strömung des gasförmigen Mediums erreicht, so daß gute Wärmeaustauschraten erzielt werden. Aufgrund der Vielzahl der Knotenpunkte zwischen den Wellungen oder Faltungen benachbarter Schichten ist jedoch die Verschmutzungsanfälligkeit von derartigen Füllkörpern bzw. Kontaktkörpern relativ groß.

Der Erfindung liegt die Aufgabe zugrunde, einen Füllkörper der angegebenen Art zu schaffen, der bei einer relativ guten Wärmeaustauschrate besonders wenig anfällig gegenüber Verschmutzungen ist.

Diese Aufgabe wird erfindungsgemäß durch einen Füllkörper mit den Merkmalen des Patentanspruchs 1 gelöst.

Bei dem erfinderischen Konzept wird durch die kreuzweise Anordnung der Wellungen oder Faltungen benachbarter Folien oder Platten im oberen Bereich des Füllkörpers ein Effekt erzielt, der etwa mit dem der eingangs beschriebenen Füllkörper vergleichbar ist. Die kreuzweise Anordnung bewirkt in diesem Bereich eine turbulente Gasströmung, die zu einem innigen Kontakt mit dem flüssigen Medium führt, so daß in diesem Bereich eine hohe Wärmeübertragungsleistung erreicht wird.

Im unteren Bereich des Füllkörpers verlaufen die Wellungen oder Faltungen benachbarter Folien oder Platten bzw. Schichten parallel zueinander. In diesem Bereich werden daher bei Senkrechtstellung der einzelnen Folien oder Platten senkrecht verlaufende Kanäle gebildet, die für eine Beschleunigung der Filmströmung und somit einen besseren Wascheffekt sorgen. In diesem Bereich ist eine im wesentlichen kontinuierliche Berührungsfläche vorhanden, und es treten keine Knotenpunkte von einander kreuzenden Wellungen bzw. Faltungen auf. Hierdurch wird in diesem Bereich die Verschmutzungsanfälligkeit beträchtlich reduziert. Darüber hinaus ist ein relativ geringer Druckverlust vorhanden.

Über die Höhe des Füllkörpers gesehen wird daher insgesamt eine besonders geringe Verschmutzungsanfälligkeit erreicht.. Die Erfindung geht dabei davon aus, daß die im oberen Bereich des Füllkörpers erreichte hohe Wärmeübertragungsleistung ausreichend ist und den üblicherweise gestellten Anforderungen genügt.

Die Wellungen oder Faltungen können entweder kontinuierlich oder diskontinuierlich aus dem sich kreuzenden Bereich in den Parallelbereich übergehen. Besonders bevorzugt wird eine Ausführungsform, die einen kontinuierlichen Übergang aufweist, da auf diese Weise strömungstechnisch ein glatterer Übergang erzielt wird und Diskontinuitäten, die ebenfalls wieder zu Verschmutzungen führen können, vermieden werden. Bei einer geradlinigen Ausbildung der Wellungen und Faltungen sowohl im oberen als auch im unteren Bereich kann beispielsweise ein gekrümmter Übergangsbereich vorgesehen sein, um auf diese Weise einen Knick der Wellungen oder Faltungen zu vermeiden.

Eine besonders bevorzugte Ausführungsform der Erfindung zeichnet sich dadurch aus, daß die Wellungen oder Faltungen benachbarter Folien oder Platten innerhalb der Folien- oder Plattenebene gekrümmt ausgebildet sind, wobei die Krümmungen benachbarter Folien entgegengesetzt zueinander verlaufen. Diese Ausführungsform wirkt sich besonders günstig auf die Strömungsverhältnisse aus, da hierbei keinerlei Diskontinuitäten mehr im Übergangsbereich auftreten, andererseits jedoch die kreuzweise Anordnung der Wellungen oder Faltungen benachbarter Schichten sichergestellt ist. Ein besonders guter Effekt wird erreicht, wenn der Krümmungsradius der Wellungen oder Faltungen zum oberen Rand des Füllkörpers hin kontinuierlich abnimmt. Der Kamm der Wellungen oder Faltungen bildet dabei beispielsweise einen Teil einer logarithmischen Spirale, die sich zum oberen Rand des Füllkörpers hin verengt. Bei dieser Ausführungsform kreuzen sich daher die Wellungen oder Faltungen benachbarter Schichten im oberen Bereich des Füllkörpers unter einem größeren Winkel als in den darunter befindlichen Bereichen. Mit anderen Worten, hierbei wird im obersten Bereich die größte Wärmeübertragungsleistung erreicht, die dann nach unten hin allmählich abnimmt, während andererseits die Geschwindigkeit der Filmströmung nach unten hin ansteigt.

Zweckmäßigerweise entspricht das Maß der Krümmung der Wellungen oder Faltungen über der Höhe des gekrümmten Abschnitts dem Maß der Teilung der Wellungen oder Faltungen oder einem ganzzahligen Vielfachen davon. Diese Ausführungsform stellt sicher, daß am oberen und unteren Ende des gekrümmten Abschnittes die Wellentäler und Wellenberge benachbarter Schichten genau gegenüberliegen, so daß an diesen Stellen entsprechende Eintritts- bzw. Austrittsquerschnitte gebildet werden, deren Höhe genau der doppelten Höhe der Wellungen oder Faltungen entspricht, d. h. wabenförmige Öffnungen (Honeycomb-Öffnungen).

Die Erfindung schlägt insbesonders vor, daß die Krümmung der Wellungen oder Faltungen im wesentlichen am unteren Rand des Füllkörpers beginnt. Hierbei gelangen die Wellungen oder Faltungen benachbarter Schichten am unteren Rand zur Deckung und laufen von dort aus nach oben mit entgegengesetzter Krümmung auseinander. Am unteren Rand verläuft daher die Tangente an den gekrümmten Kamm einer Wellung bzw. Faltung senkrecht zum unteren bzw. oberen Rand des Füllkörpers.

Zweckmäßigerweise sind zwischen benachbarten Wellungen oder Faltungen einer Folie bzw. Platte ebene Abschnitte angeordnet. Bei dieser Ausführungsform werden somit flächige Knotenpunkte zwischen den Wellentälern benachbarter Folien oder Platten gebildet, so daß sich eine gute Auflage der Folien oder Platten aneinander ergibt.

Die Wellungen oder Faltungen der Folien oder Platten können verschiedenartige Strukturierungen aufweisen. Besonders bevorzugt wird eine Ausführungsform, bei der die Wellungen oder Faltungen gerippt sind, wobei die Rippen senkrecht zu den einzelnen Kämmen bzw. Tälern verlaufen. Diese Ausführungsform fördert einen besonders innigen Kontakt zwischen dem flüssigen und gasförmigen Medium.

Die Erfindung wird nachfolgend anhand eines Ausführungsbeispiels in Verbindung mit der Zeichnung im einzelnen erläutert. Es zeigen:

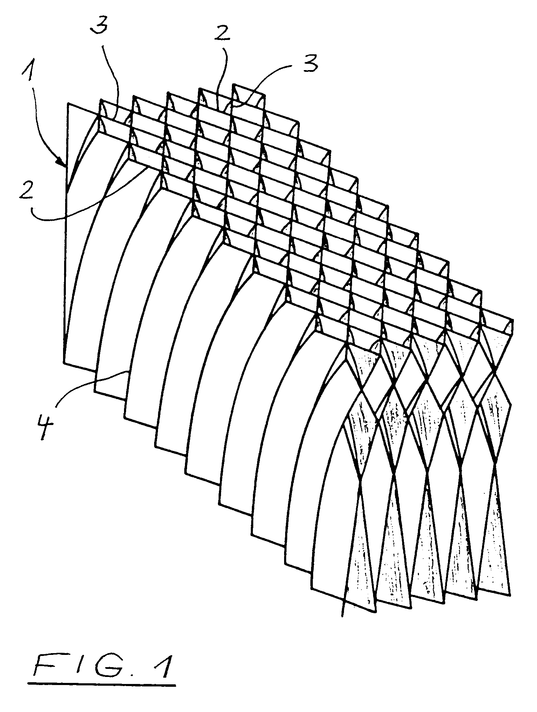

- Figur 1: eine räumliche Darstellung eines Füllkörpers;
- Figur 2: eine Seitenansicht des Füllkörpers der Figur 1; und
- Figur 3: eine Draufsicht auf den Füllkörper der Figuren 1 und 2.

Der in den Figuren dargestellte Füllkörper 1 besteht aus einer Vielzahl von Folien 2, 3 aus einem geeigneten Kunststoff, die an ihren Kontaktpunkten aneinander befestigt sind, beispielsweise mit Hilfe eines geeigneten Bindemittels, so daß sich ein einheitliches wabenförmiges Gebilde ergibt. Jede Folie ist zieharmonikaähnlich ausgebildet und besitzt eine Vielzahl von Faltungen 4. Jede Faltung 4 wird durch zwei aneinanderstoßende Schrägflächen gebildet, die mit einer geeigneten Oberflächenstrukturierung (nicht gezeigt) versehen sein können. Die Faltungen sind gekrümmt ausgebildet, wobei die Faltungen benachbarter Folien jeweils eine entgegengesetzte Krümmung aufweisen. So besitzen die Faltungen der in der Figur vordersten Folie 2 eine Rechtskrümmung, während die Faltungen der benachbarten Folie 3 eine Linkskrümmung aufweisen. Die jeweilige Krümmung über die Höhe des Füllkörpers gesehen entspricht dem doppelten Maß der Teilung der entsprechenden Faltungen der Folie, so daß sowohl am oberen als auch am unteren Ende des Füllkörpers wabenförmige Öffnungen gebildet werden, die den Eintritt des flüssigen bzw. gasförmigen Mediums begünstigen. Die Faltungen benachbarter Folien weisen jeweils eine einander entgegengesetzte Krümmung auf, so daß sich insgesamt ein Paket von einander kreuzenden Strömungskanälen im oberen Bereich des Füllkörpers ergibt, wobei diese Kanäle zum unteren Ende des Füllkörpers hin in eine parallele Lage übergehen. Sie verlaufen dann senkrecht zur Unterseite des Füllkörpers.

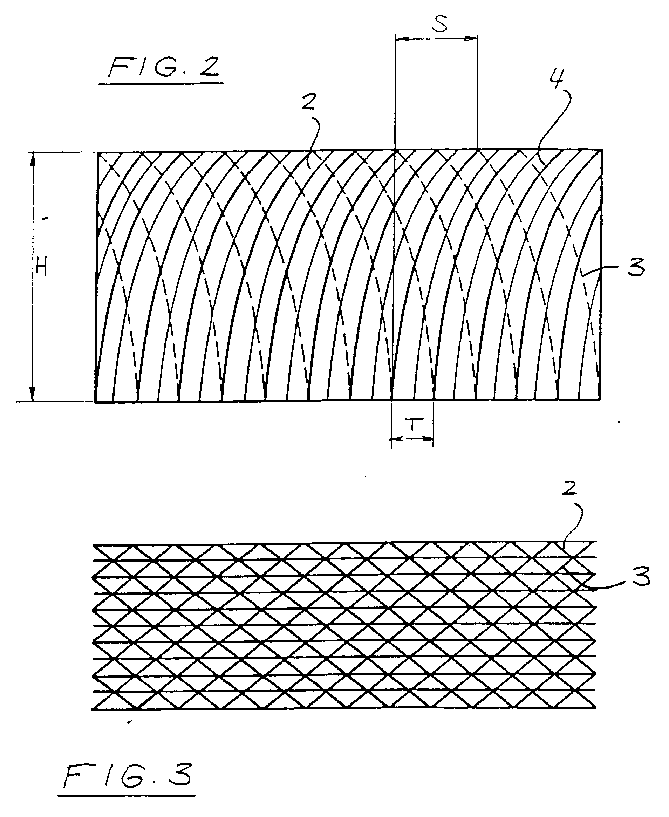

Figur 2 zeigt deutlich die entgegengesetzten Krümmungen der Faltungen 4 benachbarter Folien 2 und 3. Während die obere Folie 2 die erwähnte Rechtskrümmung aufweist, besitzt die darunterliegende Folie 3 eine Linkskrümmung. Am oberen Ende des Füllkörpers entspricht das Krümmungsmaß S über die gesamte Höhe H des Füllkörpers dem doppelten Maß der Teilung T (Abstand zwischen benachbarten Faltungen).

Bei dem hier dargestellten Ausführungsbeispiel nimmt der Krümmungsradius der Faltungen 4 zum oberen Rand des Füllkörpers hin kontinuierlich ab. So bilden die Kammlinien der Faltungen jeweils einen Teil einer logarithmischen Spirale. Am unteren Rand des Füllkörpers erstreckt sich die Tangente an eine Kammlinie senkrecht zum Rand des Füllkörpers.

Figur 3 zeigt eine Vorderansicht des Füllkörpers, wobei deutlich die wabenförmigen Öffnungen am vorderen Ende des Füllkörpers zu erkennen sind, die durch die Faltungen benachbarter Folien 2, 3 gebildet werden.

Die Herstellung des Füllkörpers kann so erfolgen, daß identisch ausgebildete Folien erzeugt und die Folien zu einem Stapel übereinandergelegt werden, wobei jede zweite Folie umgedreht wird, so daß sich die entgegengesetzt gerichteten Krümmungen der Faltungen benachbarter Folien ergeben.

## Patentansprüche

1. Füllkörper (1) für den Wärme- und Stoffaustausch im Gegenstrom, insbesondere für die Wasserkühlung durch Luft in Kühltürmen, wobei der Füllkörper (1) in einen oberen und einen unteren Bereich unterteilt ist und durch eine Vielzahl von senkrecht oder schräg stehenden, aufeinandergelegten und miteinander verbundenen gewellten oder gefalteten Folien (2, 3) oder Platten gebildet wird, wobei im oberen Teil des Füllkörpers (1) die Folien (2, 3) oder Platten so ausgebildet und aufeinandergelegt und miteinander verbunden sind, daß sich die Wellungen oder Faltungen (4) benachbarter Folien (2, 3) oder Platten kreuzen, während sie im unteren Teil parallel zueinander verlaufen.

2. Füllkörper nach Anspruch 1, dadurch gekennzeichnet, daß die Wellungen oder Faltungen (4) kontinuierlich aus dem sich kreuzenden Bereich in den Parallelbereich übergehen.

3. Füllkörper nach Anspruch 1 oder 2, dadurch gekennzeichnet, daß die Wellungen oder Faltungen (4) benachbarter Folien (2, 3) oder Platten innerhalb der Folien- oder Plattenebene gekrümmt ausgebildet sind, wobei die Krümmungen benachbarter Folien (2, 3) entgegengesetzt zueinander verlaufen.

4. Füllkörper nach Anspruch 3, dadurch gekennzeichnet, daß der Krümmungsradius der Wellungen oder Faltungen (4) zum oberen Rand des Füllkörpers (1) hin kontinuierlich abnimmt.

5. Füllkörper nach Anspruch 3 oder 4, dadurch gekennzeichnet, daß das Maß (S) der Krümmung der Wellungen oder Faltungen (4) über der Höhe (H) des gekrümmten Abschnitts dem Maß der Teilung (T) der Wellungen oder Faltungen (4) oder einem ganzzahligen Vielfachen davon entspricht.

6. Füllkörper nach einem der Ansprüche 3 bis 5, dadurch gekennzeichnet, daß die Krümmung der Wellungen oder Faltungen (4) im wesentlichen am unteren Rand des Füllkörpers (1) beginnt.

7. Füllkörper nach einem der vorangehenden Ansprüche, dadurch gekennzeichnet, daß zwischen benachbarten Wellungen oder Faltungen einer Folie bzw. Platte ebene Abschnitte angeordnet sind.

8. Füllkörper nach einem der vorangehenden Ansprüche, dadurch gekennzeichnet, daß die Wellungen oder Faltungen gerippt sind.

## Claims

1. A fill pack (1) for heat and mass transfer in counterflow, in particular for the cooling of water in cooling towers by means of air, said fill pack (1) being divided in an upper and a lower portion and being formed by a plurality of vertically or obliquely positioned corrugated or folded foils (2, 3) or plates which are superposed and joined to each other, wherein in the upper portion of said fill pack (1) the foils (2, 3) or plates are formed and are superposed and joined to each other such that the corrugations or folds (4) of adjacent foils (2, 3) or plates cross each other, while they are parallel to each other in the lower portion.

2. The fill pack according to claim 1, characterized in that the corrugations or folds (4) make a continuous transition from the crossing portion to the parallel portion.

3. The fill pack according to claim 1 or 2, characterized in that the corrugations or folds (4) of adjacent foils (2, 3) or plates are curved within the plane of the foil or plate, with the curvatures of adjacent foils (2, 3) being in opposite directions to each other.

4. The fill pack according to claim 3, characterized in that the radius of curvature of the corrugations or folds (4) decreases continuously in the direction toward the top edge of the fill pack (1).

5. The fill pack according to claim 3 or 4, characterized in that the measure (S) of the curvature of the corrugations or folds (4) over the height (H) of the curved portion is equal to the measure of the pitch (T) of the corrugations or folds (4) or an integral multiple thereof.

6. The fill pack according to one of the claims 3 to 5, characterized in that the curvature of the corrugations or folds (4) starts approximately at the bottom edge of the fill pack (1).

7. The fill pack according to one of the preceding claims, characterized in that plane portions are provided between adjacent corrugations or folds of a foil or plate.

8. The fill pack according to one of the preceding claims, characterized in that the corrugations or folds are ripped.

## Revendications

1. Elément de remplissage (1) pour échange de chaleur et de matière à contre-courant, et en particulier pour le refroidissement d'eau en tours de refroidissement, l'élément de remplissage (1) étant partagé en une partie supérieure et une partie inférieure et étant formé d'un grand nombre de feuilles (2, 3) ou de plaques ondulées ou pliées, placées verticalement ou en position inclinée, posées les unes sur les autres et reliées les unes aux autres, tandis que dans la partie supérieure de l'élément de remplissage (1) les feuilles (2, 3) ou les plaques sont configurées, posées les unes sur les autres et reliées les unes aux autres de telle sorte que les ondulations ou les plis (4) de feuilles (2, 3) ou des plaques voisines se croisent, alors que dans la partie inférieure elles s'étendant parallèlement les unes aux autres.

2. Elément de remplissage selon la revendication 1, caractérisé en ce que les ondulations ou les plis (4) passent sans discontinuité de la partie où ils se croisent à celle ou ils sont parallèles.

3. Elément de remplissage selon la revendication 1 ou 2, caractérisé en ce que les ondulations ou les plis (4) de feuilles (2, 3) ou de plaques voisines sont courbes dans le plan des feuilles ou des plaques, les courbures de feuilles (2, 3)ou de plaques voisines s'étendant dans directions opposées.

4. Elément de remplissage selon la revendication 3, caractérisé en ce que le rayon de courbure des ondulations ou des plis (4) diminue continûment en direction du bord supérieur de l'élément de remplissage (1).

5. Elément de remplissage selon la revendication 3 ou 4, caractérisé en ce que la dimension (S) de la courbure des ondulations ou des plis (4), mesurée sur la hauteur (H) de la partie courbe correspond à l'intervalle (T) entre les ondulations ou les plis (4) ou est un multiple entier de celui-ci.

6. Elément de remplissage selon l'une des revendications 3 à 5, caractérisé en ce que la courbure des ondulations ou des plis (4) débute en substance sur le bord inférieur de l'élément de remplissage (1).

7. Elément de remplissage selon l'une des revendications précédentes, caractérisé en ce qu'une partie plane est disposée entre des ondulations ou des plis voisins d'une feuille ou d'une plaque.

8. Elément de remplissage selon l'une des revendications précédentes, caractérisé en ce que les ondulations ou les plis sont nervurés.
